# EUROPÄISCHE PATENTSCHRIFT

(11) **EP 0 793 851 B1**
(45) Veröffentlichungstag und Bekanntmachung des Hinweises auf die Patenterteilung: **05.10.2005**
(21) Anmeldenummer: 95940234.8
(22) Anmeldetag: 22.11.1995
(51) Int. Cl.: H01B 13/10, B60R 16/02, H02G 15/013

(54) **VERFAHREN UND VORRICHTUNG ZUM ABSCHNITTSWEISEN UMMANTELN VON EINER VIELZAHL VON ADERN AUFWEISENDEN VERDRAHTUNGSSYSTEMEN MIT KUNSTSTOFF**
PROCESS AND DEVICE FOR PROVIDING SECTIONS OF A MULTI-CONDUCTOR WIRING SYSTEM WITH A PLASTIC SHEATH
PROCEDE ET DISPOSITIF PERMETTANT D'APPLIQUER UNE GAINE DE PLASTIQUE SUR DES SEGMENTS D'UN ENSEMBLE DE C BLAGE A PLUSIEURS CONDUCTEURS

(30) Priorität: 22.11.1994 DE 4441513; 19.05.1995 DE 29508397 U; 09.08.1995 DE 29512836 U
(43) Veröffentlichungstag der Anmeldung: 10.09.1997
(73) Patentinhaber: DSG-Canusa GmbH & Co.KG, D-53340 Meckenheim (DE)
(72) Erfinder: KORTENBACH, Martin, D-53757 St. Augustin (DE); VON PUPKA, Christoph, D-53773 Hennef (DE); ARENZ, Helmut, D-53347 Alfter (DE); KRUSENBAUM, Michael, D-53913 Swistal (DE); HEIM, Thomas, D-50321 Brühl (DE)
(74) Vertreter: Grünecker, Kinkeldey, Stockmair & Schwanhäusser Anwaltssozietät
(86) Internationale Anmeldenummer: PCT/EP1995/004610
(87) Internationale Veröffentlichungsnummer: WO 1996/016415

(56) Entgegenhaltungen:
- EP-A- 0 286 718
- EP-A- 0 296 333
- EP-A- 0 326 928
- EP-A- 0 332 821
- EP-A- 0 397 100
- EP-A- 0 536 541
- DE-C- 4 101 082
- US-A- 5 378 879

## Beschreibung

Aus der DE 36 31 769 A1 ist es bereits bekannt, zum Ausbilden eines längswasserdichten Abschnitts in einem vorbestimmten Bereich eines eine Vielzahl von Adern aufweisenden Verdrahtungssystems, wie eines Kabelbaums, die zwischen den einzelnen Adern vorhandenen Zwischenräume (Zwickel) in dem vorbestimmten abzudichtenden Bereich mit einer Kunststoffmasse zu verfüllen, worauf im Bereich des abzudichtenden Abschnitts auf den Außenumfang des Verdrahtungssystems ein schrumpffähiger Schlauch aufgeschoben wird und durch Wärmezufuhr zum radialen Schrumpfen eng um das Verdrahtungssystem herum gebracht wird. Das Verfüllen der Zwischenräume (Zwickel) zwischen den einzelnen Adern sowie zwischen der Schrumpfschlauchinnenoberfläche und den äußeren Adern des Verdrahtungssystems erfolgt dadurch, daß vor dem Aufschieben des Wärmeschrumpfschlauches zwischen die Adern ein bei der Wärmebehandlung zu einer vergrößerten Querschnittsgestalt aufquellendes Kunststoffelement, bestehend aus oder enthaltend einen thermoplastischen Schmelzkleber, welcher bei Erwärmung schmilzt, aufschäumt und dabei geschlossene Poren bildet, eingebettet wird.

Es ist in der Fachwelt auch bekannt, längswasserdichte Abschnitte in Verdrahtungssysteme, wie Kabelbäumen, herzustellen durch Ausgießen der Zwischenräume (Zwickel) mit Hilfe schmelzflüssiger Gießharze, durch Umspritzen der Adern mit Hilfe des Spritzgußverfahrens, durch Einkneten von Dichtmassen sowie durch Einbetten in Gel.

Allen diesen im Stand der Technik bekannten Verfahrensweisen sind als Nachteile gemeinsam:
- eine mangelnde Reproduzierbarkeit,
- lange Verarbeitungszeiten,
- ein kompliziertes Handling,
- die Gefahr thermischer Beschädigungen der elektrischen Adern oder anderer elektrischer/elektronischer Komponenten,
- hohe Gesamtkosten sowie
- eine zum Teil wesentliche Vergrößerung der Abdichtstelle sowie die Notwendigkeit wenigstens eines zusätzlichen Arbeitsganges bei der Montage, beispielsweise eines Kabelbaumes.

Aus der EP-A-332 821 ist ein Klebeband mit Dichtmasse zur Herstellung eines längswasserdichten Leitersystems bekannt.

Der Erfindung liegt die Aufgabe zugrunde, das Ausbilden längswasserdichter Abschnitte in vieladrigen Verdrahtungssystemen im Vergleich zu dem aus der DE 36 31 769 A1 bekannten Weise so zu verbessern, daß eine einfachere Montage der benötigten Komponenten bei beträchtlicher Zeiterspamis und hoher Reproduzierbarkeit gewährleistet ist, ohne dabei die Abmessung, d.h. insbesondere den Außendurchmesser der Abdichtstelle des Kabelbündels, deutlich zu vergrößern.

Diese Aufgabe wird hinsichtlich des Verfahrens durch den Gegenstand der Ansprüche 1 bis 3 gelöst.

Ein Kleberband, geeignet zum Durchführen des erfindungsgemäßen Verfahrens, ist in den Ansprüchen 4 bis 16 angegeben.

Beispielsweise im Automobilbau werden vielfach Verdrahtungssysteme in Form loser Aderbündel verwendet, die keinen äußeren Kabelmantel aufweisen. Derartige Verdrahtungssysteme können eine große Vielzahl unterschiedlich dimensionierter Adern umfassen, die im Fahrzeug verlegt werden müssen. Zur Vereinfachung und besseren Übersicht solcher Verdrahtungssysteme werden deren Adern (Leitungen), die über größere Entfernungen bis zur Anschlußstelle geführt werden können, zu einem sogenannten Kabelbaum gebündelt. Ein solcher Kabelbaum wird herkömmlicherweise auf einem sogenannten Nagelbrett aus einer Vielzahl auf die jeweils benötigten Längenabmessungen zugeschnittenen Adern zusammengestellt und durch Kabelgurte oder Kunststoffbänder zusammengebunden, um sodann mit Schellen am Chassis oder einem Teil anderen Teil des Fahrzeuges befestigt zu werden.

Wird ein solcher Kabelbaum durch Trennwände hindurchgeführt, beispielsweise von dem Motorraum eines Personenkraftwagens hinein in die Fahrgastzelle, so besteht die Gefahr, daß Feuchtigkeit, wie Kondenswasser oder Spritzwasser, auf den Oberflächen der Adern bzw. auf den Oberflächen von Aderbündeln entlangkriecht und an den Adernenden an blankliegende elektrische Leiter gelangt, beispielsweise in die Anschlußstecker einer Motorelektronik, was durch Kurzschlüsse zu schwerwiegenden Betriebsstörungen führen kann.

Mit Hilfe der erfindungsgemäß zu verbessernden längswasserdichten Abdichtstellen soll es an den Einzeladern bzw. an Aderbündeln entlangkriechendem Wasser unmöglich gemacht werden, über die Abdichtstelle hinweg weiter zugelangen.

Die Erfindung wird im folgenden anhand von Ausführungsbeispielen und unter Bezug auf die Zeichnung näher beschrieben. In dieser zeigt:
- Fig.1: eine schematische, perspektivische Darstellung eines Kleberbandes,
- Fig.2: eine schematische, perspektivische Darstellung eines weiteren Kleberbandes,
- Fig.3: eine schematische, perspektivische Darstellung noch eines anderen Kleberbandes,
- Fig.4: eine schematische. perspektivische Darstellung eines weiteren Kleberbandes
- Fig.5: einen schematischen Querschnitt durch eine Dichtstelle mit einer Vielzahl von Adern bzw. Leitungen, die jeweils eine Isolierhülle aufweisen, wobei die Vielzahl von Adern/Leitungen beabstandet voneinander in einer Dichtmasse eingebettet ist. Als Außenmantel ist die Dichtstelle von einem Schrumpfschlauch umgeben,
- Fig.6: eine schematische, perspektivische Darstellung einer Hilfsvorrichtung,
- Fig.7: eine schematische Darstellung der Benutzung der in Fig. 6 dargestellten Hilfsvorrichtung,
- Fig.8: eine Vielzahl von mit Hilfe der Hilfsvorrichtung gemäß Figuren 6 und 7 erzeugten in Dichtmasse eingehüllten Leiterlagen,
- Fig.9: eine schematische Darstellung einer Vielzahl von in einem Dichtmasseblock enthaltenen Leitern,
- Fig.10: eine schematische Darstellung des Aufschiebens eines Schrumpfschlauches auf eine Dichtstelle,
- Fig.11: eine mit einem äußeren Mantel umhüllte Dichtstelle,
- Fig.12: eine schematische Darstellung einer einem zusätzlichen Preßvorgang unterworfenen Dichtstelle,
- Figuren 12a bis 12c: schematische Illustrationen für den Betrieb einer ersten Preßvorrichtung,
- Figuren 13a bis 13c: schematische Darstellungen der Arbeitsweise einer zweiten Preßvorrichtung,

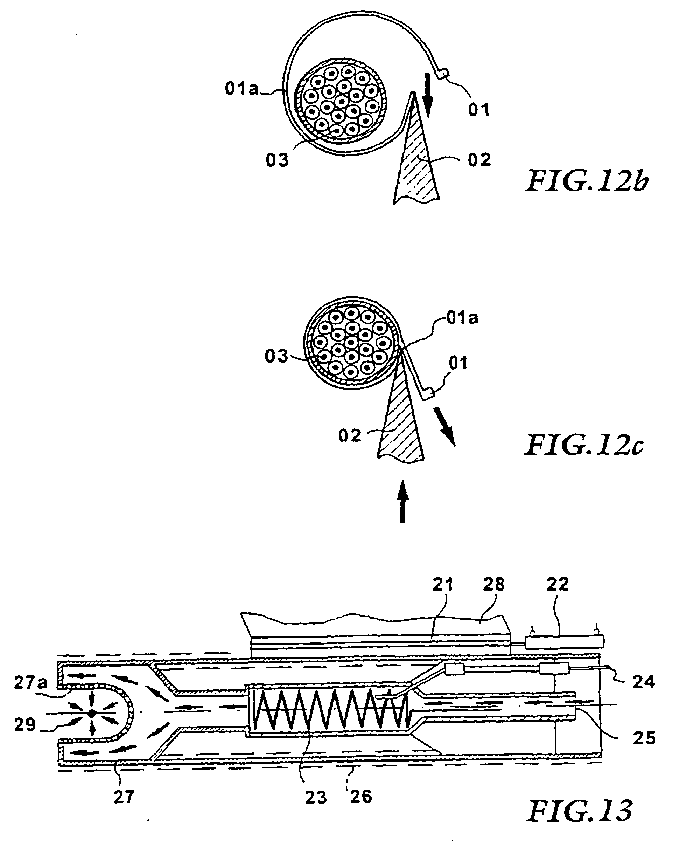

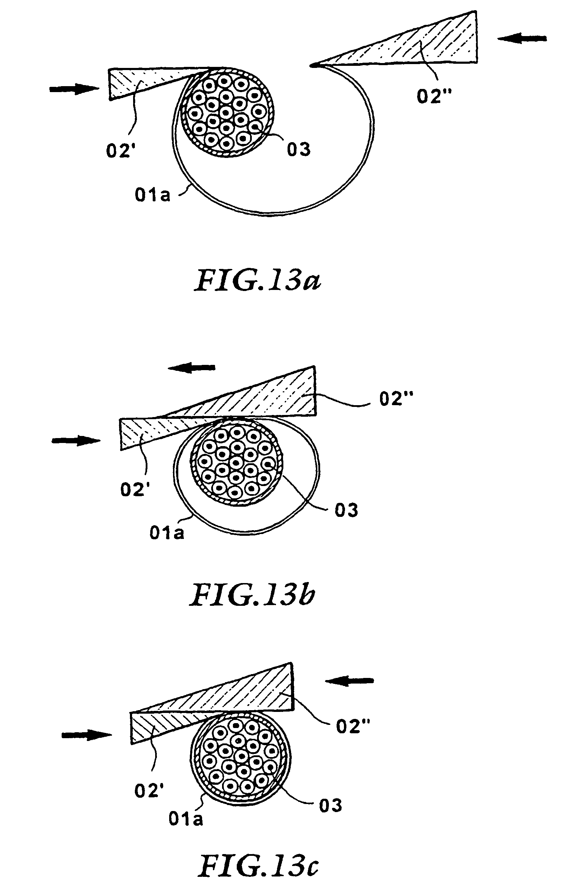

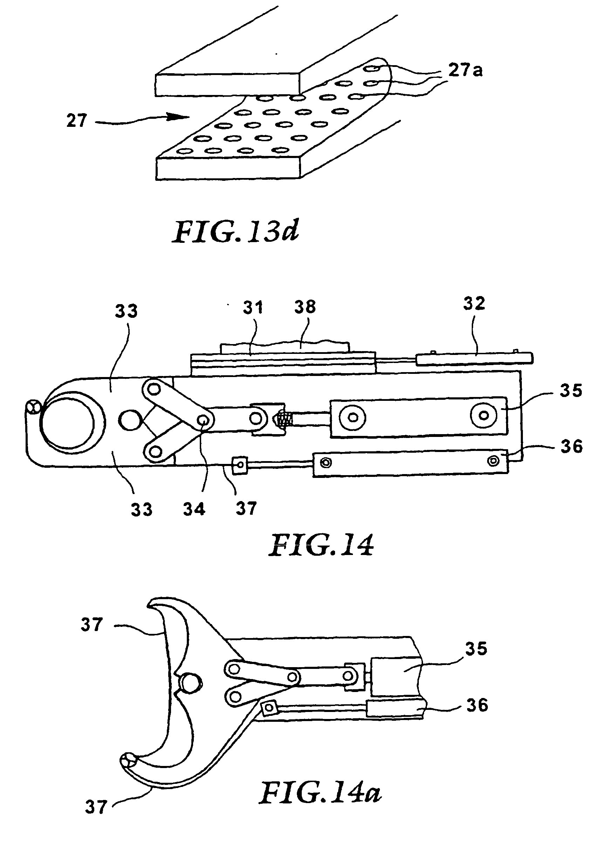

- Fig.13: eine schematische Darstellung einer Schrumpfvorrichtung,
- Fig.13A: eine perspektivische Darstellung der Schrumpfdüse aus Fig. 13,
- Fig. 14: eine schematische Darstellung einer Preßvorrichtung,
- Fig.14A: eine schematische Darstellung eines Details der in Fig. 14 dargestellten Preßvorrichtung,

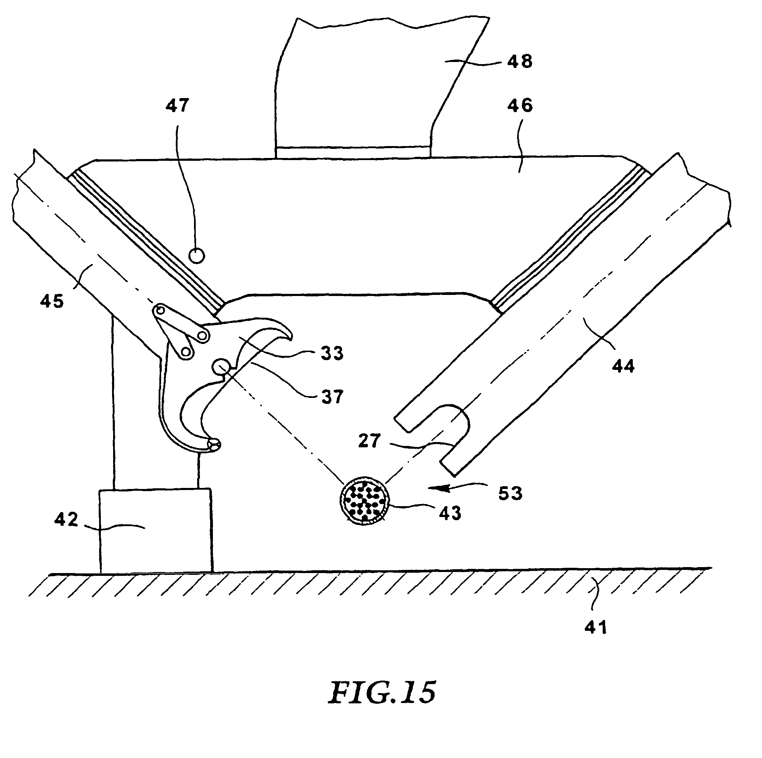

- Fig.15: eine schematische Darstellung einer kombinierten Schrumpf- und Preßvorrichtung,

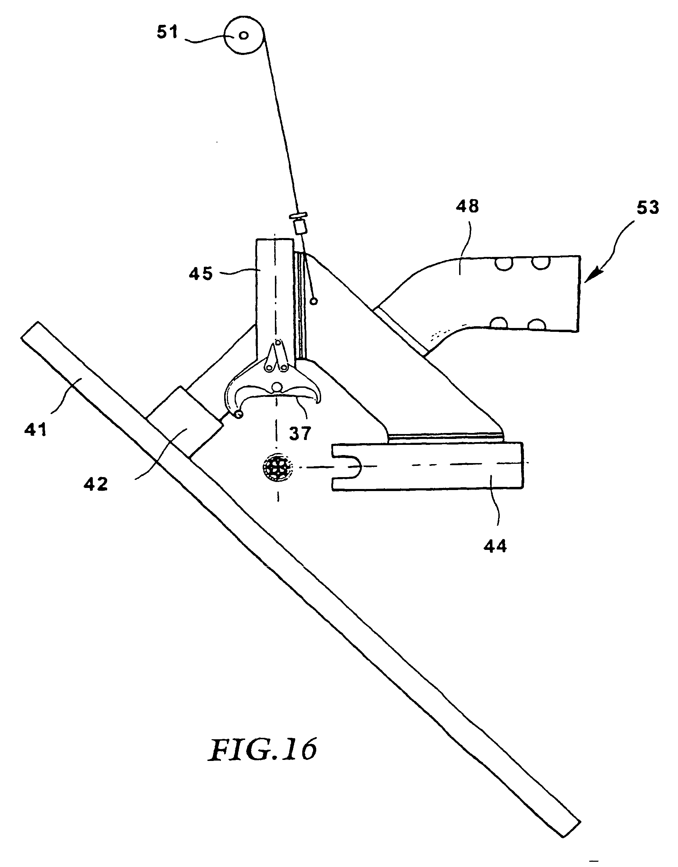

- Fig.16: eine schematische Darstellung des Aufbaus einer kombinierten Schrumpf-Preßvorrichtung in der Praxis,

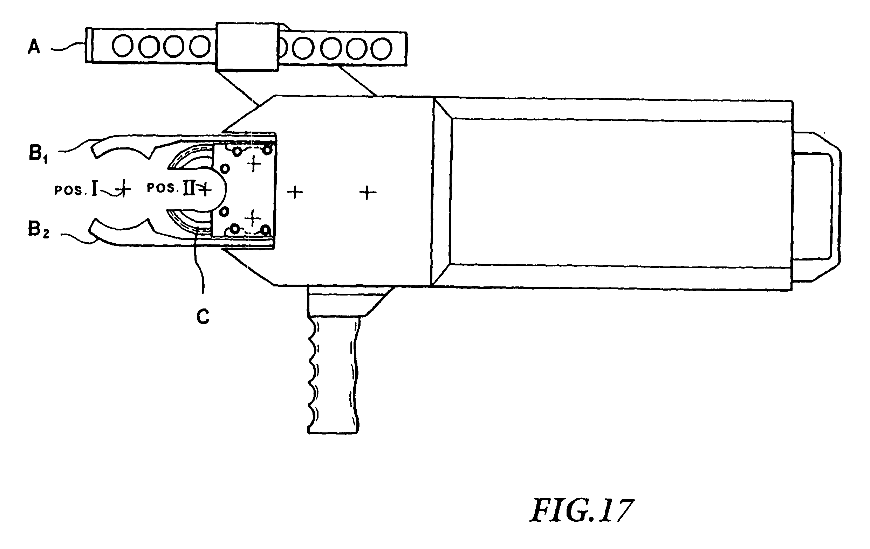

- Fig.17: eine schematische Darstellung einer zweiten Ausführungsform einer kombinierten Schrumpf-Preßvorrichtung für die Praxis und

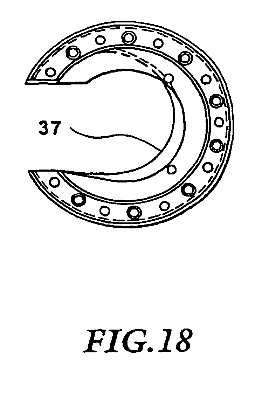

- Fig.18: eine Seitenansicht des in der Ausführungsform gemäß Fig. 17 vorgesehenen Doppelfunktionskopfes.

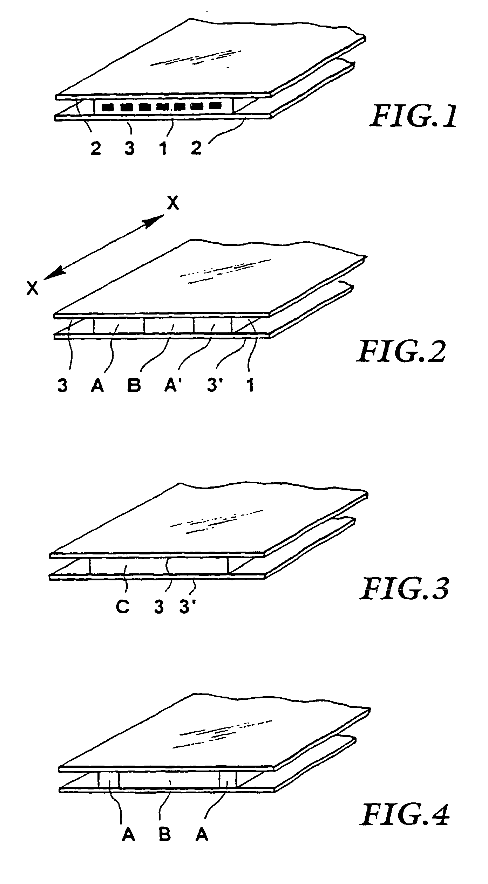

Fig. 1 zeigt schematisch den Aufbau eines erfindungswesentlichen Kleberbandes 10. Dieses Kleberband 10 besteht aus einer mittleren kiebefähigen Schicht 1 sowie oberen und unteren Deckschichten 2, zwischen welchen die klebefähige Schicht 1 sandwichartig aufgenommen ist. Durch die klebefähige Schicht 1 hindurch zieht sich ein Gewebe 3, welches vorzugsweise in der Mittelebene der klebefähigen Schicht 1 angeordnet ist und im wesentlichen die gleichen Längen- und Breitenabmessungen wie die klebefähige Schicht 1 aufweist. Die klebefähige Schicht 1 enthält, abgesehen von der Gewebeschicht 3, Butylkautschuk in modifizierter, durch Wärmezufuhr vemetzbarer Gestalt. Die Modifizierung des Butylkautschuks kann so vorgenommen sein, daß das Vernetzen innerhalb eines Zeitraums von beispielsweise bis zu acht Tage erfolgt.

Der Butylkautschuk kann ganz oder teilweise ersetzt sein durch Bitumen, Silikon, teilvernetzte Polymere und Isobutan.

Das Gewebe 3 kann ein textiles Gewebe oder ein Metallgewebe sein. Auch metallverstärkte Textilgewebe sind geeignet. Insbesondere sind Metallgewebe bevorzugt, die sich bei Stromdurchfluß erwärmen, wie später noch näher beschrieben wird.

Bevorzugterweise besitzt das Kleberband 10 eine,Breitenabmessung von 10 bis 20 mm und eine Dicke von 0,5 bis 1,5 mm. Das Band 10 kann in vorgegebenen Fix-Längen, von der Rolle oder als Endlosware verarbeitet werden.

Die klebefähige Masse der Schicht 1 soll als Dichtmasse dienen und muß deshalb so beschaffen sein, daß sie unter dem angewandten Preßdruck in die Zwischenräume (Zwickel) zwischen benachbarten Adern hineinfließen kann, um diese Zwischenräume zu füllen. Besonders wichtig ist das Ausfüllen von Zwickeln, wie sie sich zwischen drei in gegenseitiger Anlage befindlichen Adern bzw. Leiterbündeln ergeben.

Nach dem abschließenden Verpressen muß die Dichtmasse eine ausreichende Verklebung gewährleisten, so daß die in der Dichtmasse eingelagerten Adern (Leitungen) nicht in Richtung ihrer Längsachsen verschoben werden können. Ferner muß das Material der Kleberschicht so beschaffen sein, daß es nach dem Verpressen bzw. nach der Fertigstellung der Dichtstelle, je nach Anforderung, durch Wärmezufuhr oder durch eine hinreichend bemessene Lagerzeit vernetzt. Die Druckdichtigkeit der Dichtstelle muß mindestens 0,5 bar bei Raumtemperatur betragen. Während der Montage muß sichergestellt sein, daß die Adern stabil in ihrer vorgegebenen Lage fixiert sind und zwar bei allen verwendeten Werkstoffpaarungen.

Ferner muß die klebefähige Masse der Schicht 1 kalt verschweißbar sein, und eine Temperaturbeständigkeit von wenigstens 85 °C aufweisen.

Die oberen und unteren Deckschichten 2 des Kleberbandes 10 bestehen bevorzugterweise aus silikonbeschichtetem Papier. Seitlich stehen die Deckschichten 2 ca. 1 bis 3 mm über die klebefähige Schicht 1 vor und zwar zu deren beiden Seiten. Der Zweck dieser beidseitigen Überstände ist es, die äußerst klebeintensiven Massen der Schicht 1 vor Berührungskontakt mit anderen Teilen, insbesondere während des Transportes, zu bewahren. Um die klebefähige Masse 1 vor Berührungskontakt mit anderen Gegenständen zu schützen, können die Außenkanten der überstehenden Deckschichten 2 klebend miteinander verbunden sein, so daß die klebefähige Schicht 1 in einem solchen Fall längs ihrer beiden langen Außenkanten geschützt ist.

Anstelle von silikonbeschichtetem Papier können die die klebefähige Schicht 1 zwischen sich aufnehmenden oberen und unteren Deckschichten 2 aus geeigneten Kunststoffolien bestehen. Es sind für diesen Zweck auch Netz-Folien verwendbar, die vor der Weiterverarbeitung nicht entfernt zu werden brauchen.

Mit Hilfe der innerhalb der klebefähigen Schicht 1 angeordneten Gewebeeinlage 3 kann Einfluß auf die Dichtstelle genommen werden. So kann die Fließfähigkeit der Dichtmasse bei der Verarbeitung beeinflußt werden und kann die Druckbelastung auf die Dichtstelle nach der Verarbeitung entsprechend der Belastbarkeit der Gewebeeinlage 3 gewählt werden. Ferner führt das Vorhandensein der Gewebeeinlage 3 zu einer Stabilisierung des Kleberbandes 10 bei der Verarbeitung, beispielsweise bei der Verarbeitung von einer Vorratsrolle. Je nach verwendetem Material der Dichtmasse kann in Abhängigkeit von der gewählten Temperatur die Fließfähigkeit dieser Masse eingestellt werden. Wird für die Gewebeeinlage 3 ein Metallgewebe, z.B. eines aus Kupferfäden oder kupferhaltigen Fäden, benutzt, so läßt sich beispielsweise durch induktive Erwärmung des Metallgewebes eine gleichmäßige Temperaturerhöhung innerhalb des Kleberbandes 10 innerhalb kürzester Zeit erreichen. Durch eine solche gezielte Temperaturerhöhung kann das Fließverhalten der schmetzfähigen Schicht 1 in gewünschter Weise gesteuert werden.

Eine weitere Ausführungsform des Kleberbandes ist in Fig. 2 dargestellt. Hierbei wird die klebefähige Schicht 1 aus drei parallel zueinander sowie parallel zur BandLängsrichtung (X-X) verlaufenden und miteinander verbundenen Streifen (A, B, A') gebildet. Die beiden Außenstreifen A und A' bestehen aus einem klebefähigen Material, vorzugsweise aus Polyisobutylen mit Isoprenanteilen, wobei die Klebeintensität durch entsprechende Wahl des Isoprenanteiles einstellbar ist. Der mittlere Streifen B der Klebeschicht 1 besteht aus einem ganz oder teilweise vemetzten Butylkautschuk.

Die klebefähige Schicht 1 hat eine Breite von derzeit vorzugsweise 15 mm und eine Dicke von derzeit bevorzugt 1 mm. Das dreistreifige Klebeband 1 kann durch Tri-Extrudieren seiner drei Streifen A, B und A' hergestellt werden und von einer endlosen Vorratsrolle oder von abgelängten Abschnitten jeweils ge-wünschter Länge verarbeitet werden. Derzeit sind abgelängte Abschnitte mit einer Länge von 50 mm bevorzugt.

Das Vernetzen des Mittelstreifens B erfolgt durch Zugabe geeigneter Vernetzungshilfen (reaktive Komponenten) zum Ausgangsmaterial.

Um den gewünschten Vernetzungsgrad des Mittelstreifens B herbeizuführen, wird dem Extrudiervorgang eine Wärmebehandlung nachgeschaltet, nach deren Abschluß in dem mittleren Streifen B der angestrebte Vernetzungsgrad vorliegt. Es versteht sich, daß die beiden Randstreifen A und A', die aus dem gleichen Material bestehen bzw. bestehen können, auch über zumindest eine geringe Vernetzung verfügen können. Entscheidend ist, daß die beiden Außenstreifen A und A' eine intensive Klebefähigkeit aufweisen und daß der mittlere Streifen B als Folge seines Vernetzungsgrades eine ausreichend hohe Festigkeit sowie Beständigkeit gegen chemischen und mechanischen Angriff aufweist.

Trotz seiner Vernetzung besitzt der mittlere Streifen B vorzugsweise wenigstens eine gewisse Klebefähigkeit.

Bei einer anderen Lösung kann auch vorgesehen sein, den mittleren Streifen B anstelle aus einem ganz oder teilweise vernetzten Butylkautschuk aus einem Gemisch, bestehend aus Polyisobutylen mit Isoprenanteilen einerseits und vernetzbaren Polymeren (z.B. Butylkautschuk) andererseits, zu erstellen.

Gemäß einer weiteren Ausführungsform, wie sie in Fig. 3 dargestellt ist, besteht das Kleberband nicht aus drei Streifen, sondern aus einem Band gleicher Abmessung, das allerdings vollflächig aus einem Streifen C gebildet ist. Dieser Streifen kann zwecks gesteigerter Festigkeit gegen chemische wie auch mechanische Angriffe aus einem Gemisch, bestehend aus Polyisobutylen mit Isoprenanteilen einerseits und von vernetzbaren Polymeren (z.B. Butylkautschuk) andererseits, bestehen. Bei einer anderen Variante, bei der das Band ebenfalls aus einem Streifen C besteht, wird der gesamte Streifen aus einem vernetzbaren Polymer (z.B. Butylkautschuk) gefertigt. Diese Variante führt zu einer hohen Temperaturfestigkeit.

Ferner sind bei der in Fig. 4 dargestellten Ausführungsform die beiden äußeren schmalen Streifen A aus einem vernetzbaren Polymer, z.B. Butylkautschuk, hergestellt und der mittlere, breitere Streifen B aus Polyisobutylen mit Isoprenanteilen. Bei einer Variante dieser Lösung können die zwei schmalen Streifen A auch aus einem Gemisch, bestehend aus Polyisobutylen mit Isoprenanteilen einerseits und vernetzbaren Polymeren andererseits und dem Streifen B, bestehend aus Polyisobutylen mit Isoprenanteilen, bestehen.

Wärmeschrumpfendes Material in Folien- bzw. Schlauchform ist bereits bekannt. Im Rahmen der vorliegenden Erfindung wird zur äußeren Abdichtung einer Dichtstelle bevorzugt ein zuvor in Radialrichtung aufgeweiteter und gegebenenfalls vernetzter Wärmeschrumpfschlauch aufgeschoben. Der wärmeschrumpfende Schlauch kann durch eine entsprechend vorgereckte und gegebenenfalls strahlungsvernetzte Folie ersetzt werden. Bei einer abschließenden Wärmebehandlung, die im Rahmen der vorliegenden Erfindung im Temperaturbereich von 80 bis 155 °C durchgeführt wird, erfolgt bei dem wärmeschrumpfenden Material ein Rückschrumpfen in Richtung der ursprünglichen Dimensionen, also der vor dem Recken eingenommenen Abmessungen. Durch das Rückschrumpfen legt sich das wärmeschrumpfende Material eng auf den Außenumfang des Kabelbündels und zwar im Bereich der Dichtstelle an.

Das wärmeschrumpfende Material kann mit oder ohne Innenbeschichtung verarbeitet werden. Die Innenbeschichtung kann aus einem Schmelzkleber bestehen. Wird anstelle eines wärmeschrumpfenden Schlauches eine wärmeschrumpfende Folie in Bandform verwendet, so kann ein teilbares, gegebenenfalls wiederverschließbares Schrumpfband oder ein verschweißtes Schrumpfband benutzt werden.

Soll auf schrumpffähiges Material verzichtet werden, so läßt sich eine mantelförmige Außenumhüllung der Dichtstelle durch ein gewickeltes Band, eine gewickelte Folie, eine Gummitülle, ein Gummiformteil, wie eine teilbare Gummitülle, ersetzen.

Wärmeschrumpfende Schläuche und Folien, die als Außenmantel im Rahmen dieser Erfindung verwendet werden können, sind beispielsweise in der DE 38 03 318 A1 beschrieben.

Kunststoffbänder, die als Außenummantelung für Dichtstellen von Verdrahtungssystemen verwendet werden können, sind beispielsweise in dem deutschen Gebrauchsmuster G 93 12 731.6 beschrieben. Diese Bänder weisen an ihren Rändern mechanische Verbindungseinrichtungen auf, die sich um ein zu ummantelndes Objekt herumschließen lassen. Das Kunststoffband besteht vorzugsweise aus einem schrumpffähigen Material, so daß nach Herumlegen der bekannten Bänder um ein Objekt und nach Schließen der mechanischen Verbindungseinrichtungen derselben das Kunststoffband um das Objekt herumgeschrumpft werden kann.

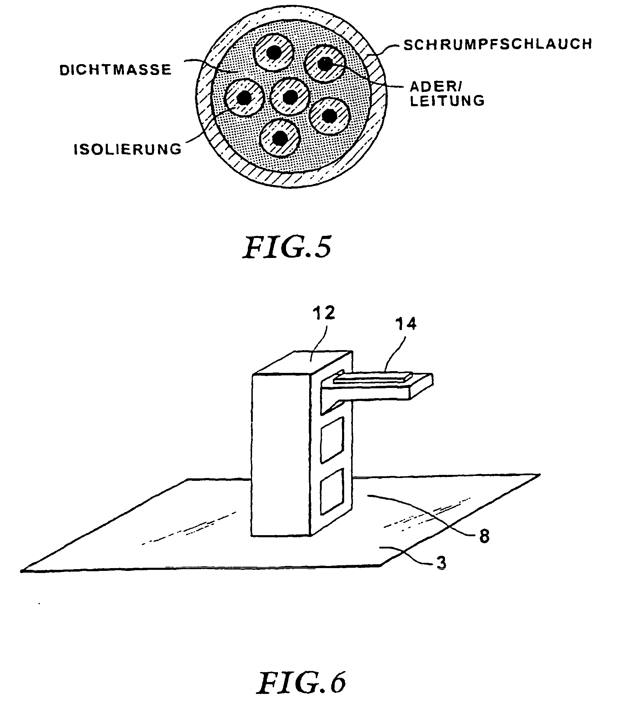

Fig. 5 zeigt schematisch einen Schnitt durch eine mit Hilfe der Erfindung abgedichtete Dichtstelle eines Leiterbündels. Man erkennt eine äußere Schrumpfschlauchhülle, welche in ihrem Inneren eine Vielzahl von Einzeiadem/Leitungen aufweist, die in dem dargestellten Ausführungsbeispiel noch mit einer Isolierung versehen sind. Zwischen den Leitern bzw. deren Isolierungsschichten befindet sich eine von der klebefähigen Schicht 1, gemäß einer der Fig. 1 bis 4, bereitgestellte Dichtmasse.

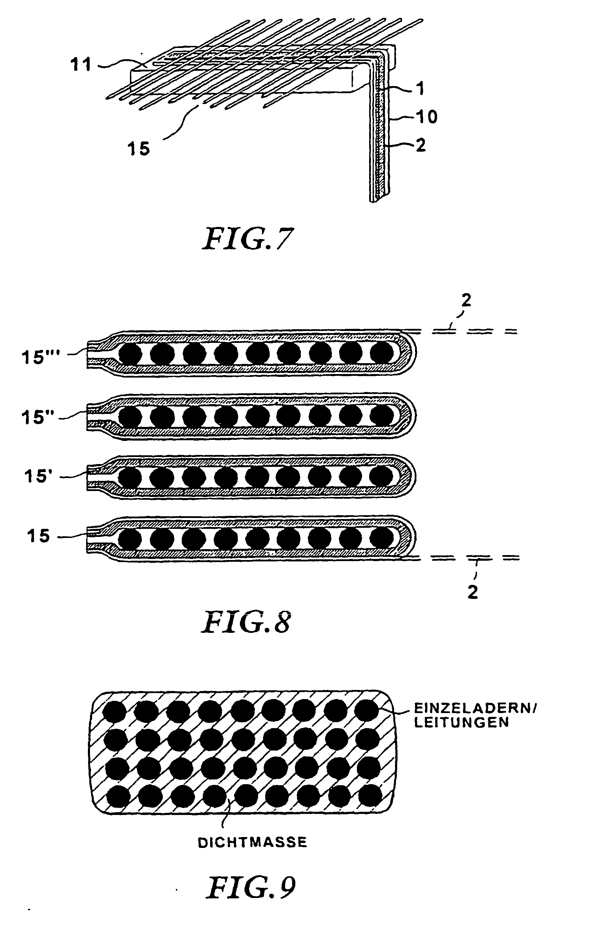

Im folgenden wird die Verarbeitung des Kleberbandes 10 (Fig.7), d.h. die erfindungsgemäße Herstellung einer Längswasserabdichtung in einem Kabelbündel, näher beschrieben.

Üblicherweise werden Kabelbäume auf geeigneten Montagebrettem (Nagelbrett) montiert. Dabei werden die einzelnen Adern/Leitungen eines Kabelbaumes von Hand entsprechend einem vorgegebenen Verdrahtungsplan verlegt, wobei die einzelnen Adern/Leitungen durchaus unterschiedliche Längenabmessungen haben können.

Die längswasserdicht zu gestaltende Dichtstelle eines Kabelbaumes ist eindeutig definiert.

Zur Verarbeitung des Kleberbandes 10 wird vorzugsweise mit Hilfe einer in Fig. 6 schematisch dargestellten Hilfseinrichtung gearbeitet, welche auf dem Montagebrett im Bereich der Dichtstelle angebracht wird. Es sei unterstrichen, daß der längswasserdicht zu machende Kabelbaum durchaus 80 Einzeladern/Leitungen oder mehr umfassen kann.

Die in Fig. 6 dargestellte Hilfsvorrichtung 8 umfaßt ein Halteteil 12 sowie ein Auflageteil 11, wobei letzteres im Halteteil 12 arretierbar aufnehmbar ist. Nach Lösung der nicht dargestellten Arretierung kann das Auflageteil 11 aus dem Halteteil 12 der Vorrichtung 8 herausgenommen werden.

In dem Auflageteil 11 ist eine Längsnut 14 ausgebildet. In diese Längsnut 14 wird eine Fixlänge des Kleberbandes 10 eingelegt, worauf von dem Kleberband die obere Deckschicht 2 abgezogen wird. Wird nicht mit Fixlängen gearbeitet, so kann alternativ ein Bandabschnitt von einer Vorratsrolle automatisch zugeführt werden.

Das Maß des Herausziehens des Auflageteils 11 aus dem Halteteil 12, d.h. die in Fig. 6 sichtbare freie Länge des Halteteils 11, richtet sich nach dem jeweils zu montierenden Kabelbaum. Die bevorzugte Länge wird so ausgelegt, daß 8 bis 15 Einzeladern/Leitungen quer zur nicht dargestellten Längsachse der Längsnut 14 auf den ausgezogenen Auflageteil 11 Platz haben. Die Länge des in die Nut 14 eingelegten Kleberbandes 10 ist auf die Anzahl der Einzeladern/Leitungen abgestimmt.

Fig. 7 zeigt schematisch das Auflageteil 11 der Hilfsvorrichtung 8, in dessen nicht erkennbare Längsnut 14 angeordnet ist. Die untere Deckschicht 2 ist unterhalb der klebefähigen Schicht 1 erkennbar.

Querverlaufend zur Längsrichtung des Auflageteils 11 ist schematisch eine Lage 15 aus einer Vielzahl von Einzeladern dargestellt. Die dargestellte Vielzahl von Einzeladern/Leitungen ist eine Teilmenge der insgesamt im herzustellenden Kabelbaum vorgesehenen Einzeladern/Leitungen. Die auf dem Auflageteil bzw. auf dem Auflageteil aufliegenden Kleberband 10 nebeneinander angeordneten Einzeladern/Leitungen sind mit dem Bezugszeichen (Fig. 7) bezeichnet. Wie in Fig. 7 dargestellt, sind die die Lage 15 bildenden Einzeladern nebeneinanderliegend auf dem Kleberband und zwar senkrecht zu dessen Längsachse im Abstand voneinander.

Ist eine erste Lage 15 mit Einzeladern/Leitungen gefüllt, so wird das in Fig. 7 vom freien Ende des Auflageteils 11 herabhängende, überstehende Kleberband 10 auf die Lage 15 umgeklappt und gegen die die Lage 15 bildenden Einzeladern/Leitungen angedrückt. Es versteht sich, daß in dieser Situation die die Lage 15 bildenden Einzeladern/Leitungen klebend in der klebefähigen Masse 1 der Kleberschicht festgehalten sind.

Das Auflageteil 11 wird sodann aus dem Halteteil 12 entnommen, und die doppelseitig von dem Kleberband 10 umschlossene Lage 15 wird nach unten (Fig. 6) aus dem Bereich des Auflageteils 11 hinweggedrückt, um Platz für eine nächste Lage von Einzeladern/Leitungen zu schaffen. Das Auflageteil 11 wird wieder in der in Fig. 5 dargestellten Weise in das Halteteil 12 hineingesteckt und arretiert, worauf wiederum eine vorbestimmte Länge des Kleberbandes 10 in die Längsnut 14 des Auflegerteils 11 eingelegt und eine nächste Lage 15 von Einzeladern/Leitungen in der beschriebenen Weise auf die klebefähige Schicht 1 des Kleberbandes 10 gedrückt wird. Wie anhand der ersten Lage 15 (obere Deckschicht 2 bereits entfernt) umgeklappt, so daß auch die zweite Lage von Einzeladern/Leitungen beidseitig von dem klebefähigen Material der Schicht 1 eingeschlossen ist.

Das vorstehend anhand von zwei Lagen beschriebene Vereinzeln, Auffächern und Einlegen der Einzeladern/Leitungen wird solange fortgesetzt, bis die Gesamtheit der den Kabelbaum bildenden Einzeladern/Leitungen in der beschriebenen Weise in das Kleberband 10 eingepackt ist. Schematisch sind einige dieser Lagen 15, 15', 15", 15''', welche aufeinanderfolgend mit Hilfe der Hilfsvorrichtung 8 hergestellt worden sind, in Fig. 8 dargestellt. Soweit bei der Anordnung gemäß Fig. 7 Bereiche der Lagen 15 bis 15''' miteinander in Berührung sind, ist jegliche Deckschicht 2 entfernt worden. Lediglich die untere Deckschicht 2 der untersten Lage 15 sowie die obere Deckschicht 2 der obersten Lage 15''' sind belassen worden, um das aus den genannten Lagen gebildete Schichtpaket ohne Kontakt mit den klebefähigen Massen handhaben zu können.

Das aus den genannten Lagen bestehende Schichtpaket wird unter Druck gesetzt, so daß die klebefähige Masse (Dichtmasse) der einzelnen Lagen einheitlich, d.h. integral, miteinander verschweißt bzw. verklebt. Sodann werden auch die zuvor nicht entfernten Deckschichten 2 (vgl. Fig. 8) entfernt.

Fig. 9 zeigt schematisch den erreichten Zustand, nämlich einen Block aus verschweißter bzw. verklebter Dichtmasse, welche ursprünglich als klebefähige Schicht 1 im Kleberband 10 angeordnet war, mit einer Vielzahl von darin verteilt in gegenseitiger Beabstandung angeordneten Einzeladern/Leitungen. Die Dichtmasse isoliert die Einzeladern/Leitungen voneinander.

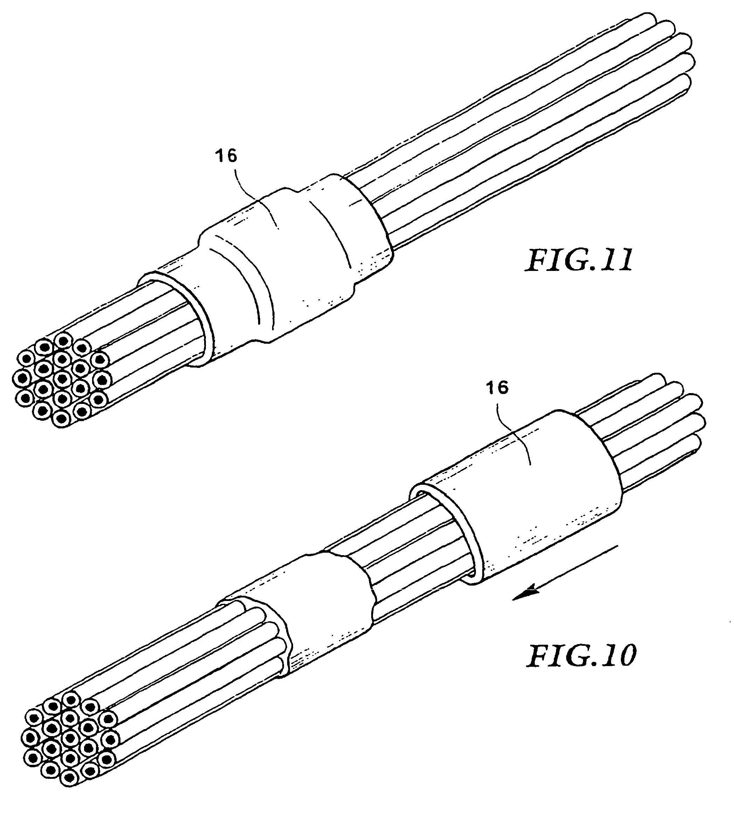

Fig. 10 zeigt schematisch die Vielzahl von Einzeladern/Leitern, welche aus dem in Fig. 9 dargestellten Dichtmassenblock zu beiden Seiten herausstehen. Wie in Fig. 10 ferner veranschaulicht, wird ein schrumpffähiger Schlauch 16 in Pfeilrichtung auf den aus Dichtmasse bestehenden Block aufgeschoben. Dieser schrumpffähiger Schlauch 16 dient als äußere Ummantlung der durch die Dichtmasse gebildeten Dichtstelle. Nach dem Aufschieben des schrumpffähigen Schlauches 16 auf die Dichtstelle wird durch Zufuhr von Wärme der schrumpffähige Schlauch zum Rückschrumpfen eng um die Dichtstelle des Kabelbündels veranlaßt.

Fig. 11 zeigt schematisch die nach dem Schrumpfen des Schlauches 16 vorliegende Situation, in welcher der Schrumpfschlauch eng auf den Außenumfang der Dichtstelle geschrumpft ist, welche von der Dichtmasse gebildet ist, die alle Zwischenräume zwischen den Einzeladern/Leitungen sowie zwischen diesen Adern/Leitungen und der Innenoberfläche des Schrumpfschlauches 16 ausfüllt. Ist bei der in Fig. 11 dargestellten Situation Feuchtigkeit auf den Einzelleitern/adern links von der Dichtstelle vorhanden, so vermag dieses Wasser nicht über die Dichtstelle hinwegzugelangen, so daß keine Feuchtigkeit von einem Bereich links von der Dichtstelle zu einem Kabelbündelbereich rechts von der Dichtstelle gelangen kann.

Unabhängig von der Anzahl der Einzeladern/-leitungen im Kabelbündel des Kabelbaums benötigt der Schrumpfprozeß ca. 15 bis 30 s. Das Schrumpfen des schrumpffähigen Schlauches 16 wird mit Hilfe von für diesen Zweck bekannten Warmluftgeräten (Industriefön) durchgeführt.

Wird als äußerer Mantel kein Schrumpfschlauch verwendet, sondern einer der im Vorstehenden angegebenen Alternativwerkstoffe, so werden diese Alternativwerkstoffe mit handelsüblichem Gerät verarbeitet.

Mit dem bevorzugt angewendeten Herumschrumpfen eines schrumpffähigen Bandes als Außenmantel ist das erfindungsgemäß angestrebte Ausbilden eines längswasserdichten Abschnittes (Dichtstelle) in einem Verdrahtungssystem (Kabelbaum) im wesentlichen abgeschlossen.

Zur Gütesteigerung der erreichten Längswasserdichtigkeit kann vorteilhafterweise noch ein abschließender Preßschritt vorgenommen werden, der eine Druckbeaufschlagung der Dichtstelle vorsieht. Dieser Preßschritt führt zu einer Erhöhung der Abdichtsicherheit, läßt sich mit dem Schrumpfprozeß automatisch durchführen und gewährleistet das Erzielen einer runden Querschnittsgestalt der Dichtstelle. Außerdem kann durch einen solchen Preßvorgang gegebenenfalls überschüssige Dichtmasse aus der Dichtstelle, d.h. unter dem Außenmantel, herausgepreßt werden, so daß sich eine Verminderung des Außendurchmessers der Dichtstelle erreichen läßt. Ferner kann ein Preßvorgang benutzt werden, um eine Kennzeichnung in die Dichtstelle einzuprägen oder dergleichen.

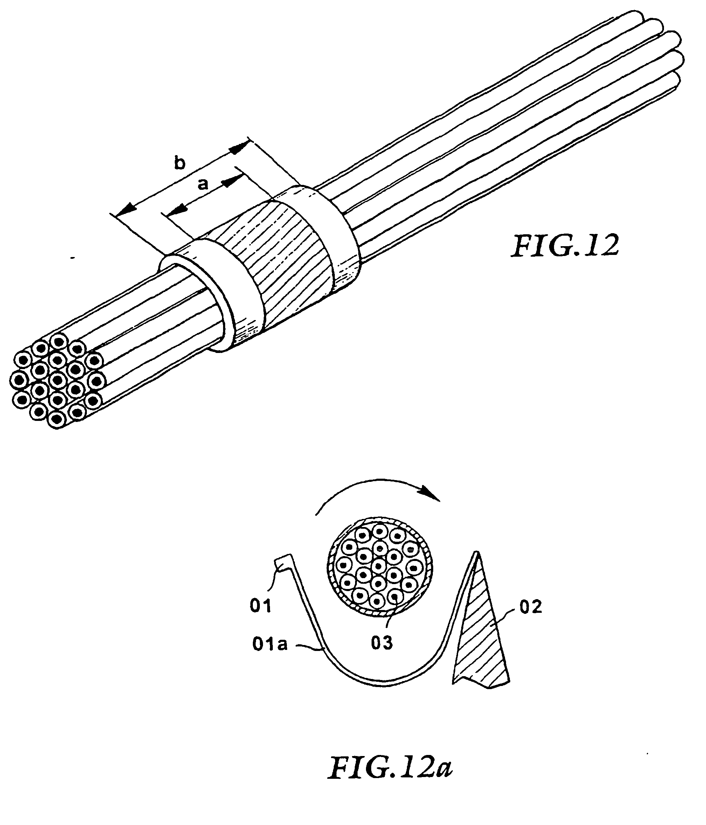

Eine abschließend verpreßte Dichtstelle ist in Fig. 12 dargestellt. In Fig. 12 bezeichnet die Strecke a die Länge der verpreßten Dichtmasse im Kabelbaum, wobei diese Längenabmessung a 20 bis 30 mm beträgt. Ferner bezeichnet in Fig. 12 die Strecke b die Länge des Außenmantels (in Kabelbaumlängsrichtung): Der Außenmantel reicht vorzugsweise 5 bis 10 mm über die Dichtmasse hinaus. Vorzugsweise beträgt in Fig. 12 die Länge des Mantels 30 bis 50 mm.

In der vorstehenden Beschreibung wurde davon ausgegangen, daß der Preßvorgang erst im Anschluß an das Aufbringen einer äußeren Ummantelung erfolgt. Alternativ zu einer solchen Arbeitsweise kann jedoch noch vor Aufbringen des Außenmantels die in Fig. 9 dargestellte Dichtstelle beispielsweise von Hand geknetet werden oder kann noch vor Aufbringen des Außenmantels die Dichtstelle gemäß Fig. 6 mit Druck beaufschlagt werden.

Würde man den Preßvorgang in einem vorgegebenen Formhohlraum, beispielsweise einem vorgegebenen Gesenk mit bestimmtem Radius durchführen, so wäre es unmöglich, den Durchmesser der Dichtstelle zu variieren.

Es werden deshalb Preßvorrichtungen der im nachfolgenden beschriebenen Art bevorzugt, da diese sich unterschiedlichen Kabelbaumdurchmessern anzupassen vermag, ohne daß ein Werkzeugwechsel vorzunehmen wäre. Insbesondere gewährleisten die im folgenden beschriebenen, schematisch in den Figuren 12 und 13 dargestellten Preßvorrichtungen das Erreichen einer kreisrunden Querschnittsgestalt der Dichtstellen nach dem Preßvorgang.

Die schematisch in Fig. 12a bis c dargestellte Preßvorrichtung enthält einen Haltekeil 02, an welchem ein erstes Ende eines Federstahlbandes 01a befestigt ist. Das andere Ende des Federstahlbandes 01a trägt eine Handhabe 1 für das Federstahlband. Wie in Fig. 12a dargestellt, wird eine zuvor hergestellte längswasserdichte Dichtstelle 03 von dem Federstahlband 1a umgeben, worauf dieses Federstahlband unter Zug gesetzt wird, wie in Fig. 12b dargestellt, bis das Federstahlband 01 die Dichtstelle 03 eng umschließt und zusammendrückt. Da die schematisch skizzierte Preßvorrichtung allseitig einen im wesentlichen gleich großen Druck auf die Dichtstelle ausübt, wird eine im wesentlichen kreisrunde Querschnittsgestalt der Dichtstelle erreicht. Die in den Figuren 13a bis c beschriebene zweite bevorzugte Preßvorrichtung unterscheidet sich von der ersten bevorzugten Preßvorrichtung gemäß Figuren 9a bis c im wesentlichen dadurch, daß zwei Haltekeile 02' und 02" vorgesehen sind. Ein Federstahlband 01a ist mit seinem einen Ende mit einem Haltekeil 02' und mit seinem anderen Ende mit einem Haltekeil 02" verbunden. Die beiden Haltekeile 02' und 02" sind gegeneinander verschieblich, wobei der Haltekeil 02' im wesentlichen ortsfest, aber der andere Haltekeil 02" in Richtung auf den erstgenannten Haltekeil 02' verschieblich ist. Wird die Dichtstelle 03 im Innenraum des gekrümmten Federstahlbandes 01a angeordnet, wie in Fig. 10a dargestellt, und wird sodann der Haltekeil 02" in Pfeilrichtung von rechts nach links verlagert, so führt dieses, wie in den Figuren 13b und 13c veranschaulicht, zu einem immer engeren Umschließen der Dichtstelle 03 durch das Federstahlband 01a, bis die Dichtstelle 03 allseitig von dem Federstahlband 01a beaufschlagt und demzufolge in eine im wesentlichen kreisrunde Querschnittsgestalt verformt wird.

Bevorzugte Ausführungsformen einer Schrumpfvorrichtung, einer Preßvorrichtung sowie einer kombinierten Schrumpf- und Preßvorrichtung werden im folgenden anhand der Figuren 13 bis 16 beschrieben.

Fig. 13 zeigt schematisch eine Schrumpfvorrichtung mit einem Schlitten 21, der einen Hub von ca. 50 bis 100 mm auszuführen vermag. Ein doppelt wirkender pneumatischer Zylinder 22 ist als Antriebsquelle vorgesehen. Ein von Preßluft durchströmtes Heizelement 23 dient als Wärmequelle. Mit dem Bezugszeichen 24 sind ein elektrischer Anschluß sowie ein gesteuerter Thermofühler bezeichnet. Ein Preßluftanschluß 25 wird mit Hilfe eines Druckminderventils gesteuert. Ein Wärmeschutzblech 26 dient zum Wärmeschutz. Die Schrumpfvorrichtung umfaßt ferner eine Schrumpfdüse 27 mit im wesentlichen U-förmiger Querschnittsgestalt. In den einander zugewandten Oberflächen des U-förmigen Bauteils ist eine Vielzahl von Wärmeaustrittsbohrungen 27a ausgebildet, aus welchen Warmluft ausströmen kann. Ein Träger ist mit dem Bezugszeichen 28 bezeichnet, und das Bezugszeichen 29 gibt schematisch den Mittelpunkt von innerhalb der Schrumpfdüse 27 wirkenden Warmluftströmen an. Die im Inneren des U-förmigen Bauteils der Schrumpfdüse 27 erzeugte Warmluft ist hinsichtlich Temperatur sowie hinsichtlich Luftmenge steuerbar.

Fig. 13A zeigt schematisch eine perspektivische Darstellung des U-förmigen Bauteils der Schrumpfdüse 27, wobei einige der Vielzahl von Wärmeaustrittsbohrungen 27a bezeichnet sind. Die in den Figuren 14 sowie 14A schematisch dargestellte Preßvorrichtung umfaßt einen von einem doppelt wirkenden pneumatischen Zylinder 32 antreibbaren Schlitten 31, dessen Hub ca. 50 bis 100 mm beträgt. An einem Ende der Vorrichtung sitzt eine Zange 33, welche vermittels einer Gelenkhebeleinrichtung 34 aus einer geschlossenen Stellung in eine offene Stellung und aus der offenen Stellung zurück in die geschlossene Stellung bewegbar ist. Für den Antrieb der Zange 33 ist ein doppelt wirkender pneumatischer Zylinder 35 vorgesehen, welche Gelenkhebeleinrichtung 34 beaufschlagt. Ein weiterer doppelt wirkender pneumatischer Zylinder 36 ist vorgesehen, um ein Federstahlband 37 (vgl. auch Figuren 12 und 13) zu betätigen. Das als Preßband dienenden Federstahlband 37 ist im Bereich der Öffnung der Zange 33 angeordnet. Wie den Figuren 14 sowie 14A zu entnehmen, ist ein Kolbenstangenende des pneumatischen Zylinders 36 mit einem Ende des Preßbandes 37 verbunden. Das andere Ende des Preßbandes 37 ist an einem Ende der Zange 33 befestigt. Durch Betätigung des Zylinders 36 kann das Bremsband 37 so gestrafft und um eine in den Figuren 14 und 14A nicht dargestellte Dichtstelle herumgeschlungen werden, wie in Fig. 12 dargestellt.

In Fig. 15 ist eine kombinierte Schrumpf-Preßvorrichtung 53 nach der Erfindung schematisch dargestellt. Diese kombinierte Vorrichtung 53 ist auf einem Montagebrett 41 angebracht und weist eine Andock-Stelle 42 mit Stützpunkt auf. Das Bezugszeichen 43 bezeichnet die Dichtstelle eines Kabelbaums, und es ist zu erkennen, daß die Längsachsen einer Schrumpfvorrichtung 44 (vgl. Fig. 13) sowie einer Preßvorrichtung 45 (vgl. Fig. 14) sich im Mittelpunkt der Dichtstelle 43 schneiden. Ferner ist ein Geräteträger 46 an der Preßvorrichtung 45 verschieblich gelagert. Im Träger 46 ist ein Befestigungspunkt 47 vorgesehen, an welchem ein Balanceseilzug 51 (Fig. 16) angreift. Das Bezugszeichen 48 bezeichnet einen am Träger 46 vorgesehenen Handgriff.

Wie schematisch in Fig. 16 dargestellt, ist die kombinierte Vorrichtung 53 an dem Balanceseilzug 51 aufgehängt. Das Montagebrett 41 weist die Andockstelle 42 für die Kombivorrichtung 53 auf. Im Schnittpunkt der Längsachsen der Schrumpfvorrichtung 44 sowie der Preßvorrichtung 45 ist schematisch der Mittelpunkt einer Dichtstelle 43 (vgl. Fig. 15) dargestellt.

Nachdem die Dichtstelle entsprechend vorbereitet und fertiggestellt ist, wird die kombinierte Schrumpf-Preßvorrichtung 53 auf dem Montagebrett 41 angedockt.

Nach der Andockung erfolgt ein automatischer Start der Schrumpf-Preßvorrichtung 53, worauf diese Kombivorrichtung in ihre Arbeitsposition vorfährt. Nach Ablauf eines programmierbaren Prozesses nimmt die Kombivorrichtung 53 wieder ihre Ausgangsposition ein. Darauf startet der programmierte Preßvorgang, wozu die Preßvorrichtung 45 in ihre Arbeitsstellung vorfährt, die Zange 33 sich um die Dichtstelle 43 schließt und wobei das Preßband 37 in pressender Anlage an die Dichtstelle gespannt wird. Nach Ablauf des Preßprozesses kehrt die Kombivorrichtung 53 in ihre Ausgangsstellung zurück. Die Prozeßsteuereinheit (nicht dargestellt) meldet durch ein Signal den Abschluß des Schrumpf- und Preßvorganges.

Eine bevorzugte Ausführungsform der kombinierten Schrumpf-Preßvorrichtung ist in den Figuren 17 und 18 dargestellt. Diese Ausführungsform unterscheidet sich von der ersten Ausführungsform gemäß Figuren 15 und 16 in erster Linie dadurch, daß die Funktionen des Schrumpfens und Pressens in einem Doppelfunktionskopf vereint sind.

Wie Figur 17 zu entnehmen, ist die zweite Ausführungsform zum Andocken auf einem Nagelbrett (nicht dargestellt) mit Hilfe einer Andockstützte A eingerichtet. Im Doppelfunktionskopf sind Heißluftgebläse B₁ und B₂ einander gegenüberliegend vorgesehen und ist außerdem eine Preßvorrichtung C untergebracht. Die Preßvorrichtung C ist mit einem Spannband entsprechend dem Spannband 37 in den Figuren 15 und 16 versehen, wie in Figur 18 dargestellt.

Die Arbeitsweise der mit dem Doppelfunktionskopf versehenen Ausführungsform ist wie folgt:
1. Das Gerät wird mit Hilfe der Andockstütze A an einem nicht dargestellten Nagelbrett angedockt. Dadurch werden die Heißluftgebläse B₁ und B₂ aktiviert, so daß ein zwischen diese beiden Heißluftgebläse eingebrachter Schrumpfschlauch in ca. 30 bis 60 Sekunden auf den Umfang des von dem Schrumpfschlauch umschlossenen Aderbündels aufgeschrumpft wird. Während dieses Schrumpfvorganges befindet sich das Gerät auf der in Figur 17 dargestellten Position I.
2. Anschließend fährt das Gerät automatisch nach vorn auf die in Figur 17 dargestellte Position II, so daß sich das umschrumpfte Aderbündel in der Preßvorrichtung C befindet. Hier werden das Aderbündel nebst dem aufgesehrumpfen Schrumpfschlauch von dem in Figur 18 dargestellten Spannband 37 umfaßt und etwa 30 Sekunden lang gepreßt. Die Vorgänge des Schrumpfens und Pressens sind im Vorhergehenden detailliert beschrieben worden.
3. Anschließend fährt das Gerät automatisch wieder in die Position I zurück, wobei ggf. mit Hilfe der beiden Heißluftgebläse noch nachgeheizt werden kann, falls eine weitere Glättung der Schrumpfschlauchoberfläche erforderlich ist.

Die Heißluftgebläse funktionieren nach dem in Figur 13 dargestellten Prinzip. Die Heißluftgebläse B₁ und B₂ sind jedoch nicht als U-förmige Düse ausgebildet, die von einem Heizelement versorgt werden. Bei der bevorzugten Ausführungsform gemäß Figuren 17 und 18 sind zwei Heizelemente vorgesehen, die jeweils getrennt voneinander das obere Heißluftgebläse B₁ bzw. das untere Heißluftgebläse B₂ bedienen.

Der bevorzugten Ausführungsform gemäß Figuren 17 und 18 liegt das in den Figuren 12A, 12B, 12C, 13A, 13B und 13C der Anmeldungsunterlagen veranschaulichte Prinzip zugrunde.

Mit Hilfe der Erfindung läßt sich die für das Ausbilden einer Dichtstelle benötigte Zeit drastisch vermindern. War für das Ausbilden einer Dichtstelle einschließlich des abschließenden Aufbringens eines Schrumpfschlauches bei herkömmlicher Verfahrensweise ein Zeitbedarf von etwa 15 min kaum zu unterbieten, so kann dank der Erfindung in einem Zeitraum von maximal 1 min ein vieladriger Kabelbaum in einem vorbestimmten Abschnitt längswasserdicht gemacht werden.

Das mit Hilfe der Erfindung ermöglichte automatische Herstellen einer Dichtstelle in einem vieladrigen Verdrahtungssystem kann mit Hilfe eines Roboters durchgeführt werden.

## Patentansprüche

1. Verfahren zum Ausbilden eines längswasserdichten Abschnittes in einem vorbestimmten Bereich eines eine Vielzahl von Einzeladern/Leitungen aufweisenden Verdrahtungssystems, wie eines Kabelbaums, bei welchem die zwischen den Einzeladern/Leitungen vorhandenen Zwischenräume in dem abzudichtenden Bereich mit einer Dichtmasse verfüllt werden, wobei im Bereich des abzudichtenden Abschnitts auf den Umfang des Verdrahtungssystems ein Wärmeschrumpfschlauch durch Wärmezufuhr aufgeschrumpft wird,
**dadurch gekennzeichnet,**
- **dass** ein Kleberband (10) bereitgestellt wird, bei welchem eine Butylkautschuk enthaltende, klebefähige Dichtmassenschicht (1) sandwichartig zwischen nichtklebenden Deckschichten (2) aufgenommen ist,
- **dass** die Einzeladern/Leitungen des Verdrahtungssystems zu wenigstens einer aufgefächerten Lage (15) vereinzelt und in diesem aufgefächerten Zustand auf die Butylkautschuk enthaltende, klebefähige Dichtmassenschicht (1) des Kleberbandes (10) geklebt werden und zwar quer zur Längsrichtung des Kleberbandes, nachdem die eine Deckschicht vom Kleberband abgezogen und **dadurch** die Dichtmassenschicht (1) freigelegt worden ist,
- worauf ein überstehender Endabschnitt des Kleberbandes (10) umgeklappt und von oben auf die aufgefächerten Einzeladern/Leitungen gedrückt wird, so dass die Einzeladern/Leitungen beidseitig von Butylkautschuk enthaltenden Schichten eingeschlossen sind, und
- **dass** diese Butylkautschuk enthaltenden Schichten nach Entfernen der zuvor nicht entfernten Deckschichten des Kleberbandes durch Druckeinwirkung miteinander integral miteinander kaltverschweißt/verklebt werden, bevor das Schrumpfen des Wärmeschrumpfschlauches bei Temperaturen von 80 bis 155 °C vorgenommen wird.

2. Verfahren nach Anspruch 1, **dadurch gekennzeichnet, dass** vor oder nach dem Aufschrumpfen des Schrumpfschlauches der abzudichtende Bereich ein zweites Mal mit Druck beaufschlagt wird.

3. Verfahren nach Anspruch 1 oder 2, **dadurch gekennzeichnet, dass** das Ausbilden des längswasserdichten Abschnittes programmgesteuert, automatisch erfolgt.

4. Kleberband, geeignet für das Durchführen des Verfahrens nach Anspruch 1, **gekennzeichnet durch** eine klebefähige Schicht (1), welche sandwichartig zwischen zwei nicht klebenden Deckschichten (2) aufgenommen ist.

5. Kleberband nach anspruch 4, **dadurch gekennzeichnet, daß** im wesentlichen in der Mittelebene der klebefähigen Schicht ein Gewebe (3) vorgesehen ist.

6. Kleberband nach Anpruch 5, **dadurch gekennzeichnet, daß** das Gewebe (3) nach Länge und Breite den abmessungen der klebefähigen Schicht (1) entspricht.

7. Kleberband nach Anspruch 5 oder 6, **dadurch gekennzeichnet, daß** das Gewebe (3) aus einem Textilmaterial oder einem nichtmetallischen Material oder einem Metall-Textil-Mischmaterial besteht.

8. Kleberband nach Anspruch 7, **dadurch gekennzeichnet, daß** das Gewebe (3) induktiv erwärmbar ist.

9. Kleberband nach Anspruch 4, **dadurch gekennzeichnet, daß** die klebefähige Schicht aus drei parallel zur Kleberband-Längsrichtung verlaufenden, miteinander verbundenen Kunststoffstreifen besteht, wobei der mittlere Streifen (B) aus einem Gemisch, bestehend aus Polyisobutylen mit Isoprenanteilen einerseits und vernetzbaren Polymeren andererseits besteht.

10. Kleberband nach Anspruch 4, **dadurch gekennzeichnet, daß** die klebefähige Schicht (1) von einem Streifen (C) gebildet ist, der aus einem vernetzbaren Polymer gefertigt ist.

11. Kleberband nach Anspruch 10, **dadurch gekennzeichnet, daß** der Streifen (C) aus einem Gemisch, bestehend aus Polyisobutylen mit Isoprenanteilen einerseits und vernetzbaren Polymeren andererseits besteht.

12. Kleberband nach Anspruch 4, **dadurch gekennzeichnet, daß** die klebefähige Schicht (1) aus drei parallel zur Kleberband-Längsrichtung verlaufenden Streifen besteht, von denen der mittlere Streifen breiter als die beiden äußeren Streifen ist und die beiden äußeren Streifen (A) aus vemetzbarem Polymer und der mittlere Streifen (B) aus Polyisobutylen mit Isoprenanteilen besteht.

13. Kleberband nach Anspruch 4, **dadurch gekennzeichnet, daß** die klebefähige Schicht (1) von zwei schmalen äußeren Streifen (A) aus einem Gemisch, bestehend aus Polyisobutylen mit Isoprenanteilen einerseits und vernetzbaren Polymeren andererseits, besteht und einem mittleren Streifen (B), der aus Polyisobutylen mit Isoprenanteilen gebildet ist.

14. Kleberband, geeignet zum Durchführen des Verfahrens nach Anspruch 1, **gekennzeichnet durch** eine klebefähige Schicht (1), die aus drei parallel zur Kleberband-Längsrichtung verlaufenden, miteinander verbundenen Kunststoffstreifen (A, B, A') besteht, nämlich einem Mittelstreifen (B) und zwei an den Mittelstreifen zu beiden Seiten angrenzenden Seitenstreifen (A, A'), wobei der Mittelstreifen (B) vollständig oder teilweise vemetzt ist und die beiden Seitenstreifen klebend sind.

15. Kleberband nach Anspruch 14, **dadurch gekennzeichnet, daß** der Mittelstreifen (B) der klebefähigen Schicht (1) aus vollständig oder teilweise vernetztem Butylkautschuk besteht und daß die beiden Seitenstreifen (A, A') der Klebeschicht aus Polyisobutylen mit Isoprenanteilen bestehen.

16. Kleberband nach Anspruch 14, **dadurch gekennzeichnet, daß** die aus den drei parallelen Streifen (A, B, A') bestehende klebefähige Schicht (1) sandwichartig zwischen einer oberen nichtklebenden Deckschicht (2) und einer unteren nichtklebenden Deckschicht (2') aufgenommen ist.

## Claims

1. A method for forming a longitudinally water-tight section in a predetermined area of a multi-conductor wiring system, such as a cable harness, wherein spaces between individual conductors are filled with a sealing compound throughout the area to be sealed, and by heat supply a shrinkable hose is shrunk onto the parameter of said wiring system,
**characterised in**
- **that** an adherent tape (10) is provided having a butyl rubber comprising an adhesive sealing compound layer (1), sandwiched between non-adhesive cover layers (2),
- **that** said individual conductors of said wiring system are singularised to at least one spread layer (15), and in that spread-out state are adhered onto said butyl rubber comprising adhesive sealing compound (1) of said adherent tape (10) in a direction transverse to said adherent tape after one of said cover layers (2) has been stripped off from said adherent tape for exposing said sealing compound layer (1),
- whereupon a protruding end portion of said adherent tape is folded and pressed from above onto said spread-out individual conductors, such that said individual conductors are sandwiched between butyl rubber comprising layers, and
- **that** said butyl rubber comprising layers are integrally cold-welded/glued to each other by pressure supply after having removed the not previously stripped-off cover layer, whereafter shrinking of said shrinkable hose is carried out at temperatures from 80 to 155°C.

2. The method of claim 1, **characterised in that** prior to or after said shrinking of said shrinking hose, the area to be sealed is subjected to pressure supply for a second time.

3. The method of claim 1 or 2, **characterised in that** said forming of a longitudinally water-tight section is carried out automatically, programme controlled.

4. Adherent tape, suitable for carrying out the method of claim 1, **characterised by** an adherent layer (1) which is sandwiched between two non-adherent cover layers (2).

5. Adherent tape according to claim 4, **characterised in that** a fabric (3) is provided essentially in the central plane of said adhesive layer.

6. Adherent tape according to claim 5, **characterised in that** the length and the width of said fabric (3) corresponds to the dimensions of the adhesive layer (1).

7. Adherent tape according to claims 5 or 6, **characterised in that** said fabric (3) consists of a textile material or of a non-metallic material or of a mixed metal/textile material.

8. Adherent tape according to claim 7, **characterised in that** said fabric can be heated by inductive heating.

9. Adherent tape according to claim 4, **characterised in that** said adhesive layer consists of three interconnected strips of plastic material, extending parallel to the longitudinal direction of said adherent tape, wherein the central strip (B) consists of a mixture that consists, on the one-hand, of polyisobutylene containing a certain percentage of isoprene and on the other hand, of cross-linkable polymers.

10. Adherent tape according to claim 4, **characterised in that** said adhesive layer (1) is formed by a strip (C) produced from a cross-linkable polymer.

11. Adherent tape according to claim 10, **characterised in that** said strip (C) consists of a mixture consisting, on the one-hand, of polyisobutylene containing a certain percentage of isoprene and, on the other hand, of cross-linkable polymers.

12. Adherent tape according to claim 4, **characterised in that** the adhesive layer (1) consists of three strips which extend parallel to the longitudinal direction of the adherent tape, wherein the central strip is wider than the two outer strips and that both of the outer strips (A) are made of cross-linkable polymer whereas the central strip (B) is made of polyisobutylene with a certain percentage of isoprene.

13. Adherent tape according to claim 4, **characterised in that** said adhesive layer (1) is composed of two narrow outer strips (A) consisting of a mixture that consists, on the one-hand, of polyisobutylene containing a certain percentage of isoprene and, on the other hand, of cross-linkable polymers, and of a central strip (B) consisting of polyisobutylene containing a certain percentage of isoprene.

14. Adherent tape, suitable for carrying out the method of claim 1, **characterised by** an adhesive layer (1) consisting of three interconnected strips of plastic material (A,B,A'), which extend parallel to the longitudinal direction of the adherent tape, namely a central strip (B) and two lateral strips (A, A') bordering on said central strip on both sides thereof, said central strip (B) being fully or partly cross-linked and the two lateral strips being adhesive strips.

15. Adherent tape according to claim 14, **characterised in that** the central strip (B) of said adhesive layer (1) consists of fully or partly vulcanised butyl rubber and that the two lateral strips (A, A') of the adhesive layer consists of polyisobutylene containing a certain percentage of isoprene.

16. Adherent tape according to claim 14, **characterised in that** said adhesive layer (1), consisting of three parallel strips (A, B, A') is sandwiched between an upper non-adhesive cover layer (2) and a lower non-adhesive cover layer (2').

## Revendications

1. Procédé de configuration d'un segment étanche à l'eau, dans le sens longitudinal, dans une zone prédéterminée d'un système de câblage présentant une multiplicité de brins individuels / de conducteurs, tel qu'un faisceau de câbles, dans lequel les espaces intermédiaires existant entre les brins individuels / les conducteurs sont remplis d'une matière d'étanchéité dans la zone à rendre étanche, où dans la zone du segment à rendre étanche, sur la périphérie du système de câblage, un tuyau flexible est emmanché à chaud par apport de chaleur,
**caractérisé**
- **en ce qu'**un ruban adhésif (10) est fourni, dans lequel une couche de matière d'étanchéité adhésive (1) contenant du caoutchouc butyle est placée en sandwich entre des couches de recouvrement (2) non adhésives,
- **en ce que** les brins individuels / les conducteurs du système de câblage sont réunis dans au moins une couche (15) formée en éventail et, dans cet état formé en éventail, collés sur la couche de matière d'étanchéité adhésive (1) du ruban adhésif (10), contenant du caoutchouc butyle, et ce, de façon transversale par rapport à la direction longitudinale du ruban adhésif, après que l'une des couches de recouvrement a été enlevée du ruban adhésif et que, de ce fait, la couche de matière d'étanchéité (1) a été mise à nu,
- à la suite de quoi un segment d'extrémité du ruban adhésif (10), qui dépasse, est rabattu et pressé, d'en haut, sur les brins individuels / les conducteurs formés en éventail, de sorte que les brins individuels / les conducteurs sont enrobés des deux côtés par des couches contenant du caoutchouc butyle, et
- **en ce que** ces couches contenant du caoutchouc butyle, après élimination des couches de recouvrement du ruban adhésif, non supprimées auparavant, sont, sous l'effet de la pression, soudées à froid / collées ensemble, de manière intégrale, avant que le tuyau flexible emmanché à chaud se rétracte à des températures comprises entre 80°C et 155°C.

2. Procédé selon la revendication 1, **caractérisé en ce que** la zone à rendre étanche est sollicitée une deuxième fois par la pression, avant ou après avoir emmanché à chaud le tuyau flexible.

3. Procédé selon la revendication 1 ou 2, **caractérisé en ce que** la configuration du segment étanche à l'eau, dans le sens longitudinal, est réalisée automatiquement, en étant commandée par un programme.

4. Ruban adhésif approprié pour la réalisation du procédé selon la revendication 1, **caractérisé par** une couche adhésive (1) qui est placée en sandwich entre deux couches de recouvrement (2) non adhésives.

5. Ruban adhésif suivant la revendication 4, **caractérisé en ce qu'**il est prévu un tissu (3) situé pratiquement dans le plan médian de la couche adhésive.

6. Ruban adhésif selon la revendication 5, **caractérisé en ce que** le tissu (3) correspond, en longueur et en largeur, aux dimensions de la couche adhésive (1).

7. Ruban adhésif selon la revendication 5 ou 6, **caractérisé en ce que** le tissu (3) se compose d'une matière textile ou d'une matière non métallique ou bien d'une matière mixte en métal et en textile.

8. Ruban adhésif selon la revendication 7, **caractérisé en ce que** le tissu (3) peut être chauffé par induction.

9. Ruban adhésif selon la revendication 4, **caractérisé en ce que** la couche adhésive se compose de trois bandes de matière plastique reliées entre elles et s'étendant parallèlement à la direction longitudinale du ruban adhésif, où la bande centrale (B) se compose d'un mélange constitué de polyisobutylène comprenant des proportions d'isoprène, d'une part, et des polymères réticulables, d'autre part.

10. Ruban adhésif selon la revendication 4, **caractérisé en ce que** la couche adhésive (1) est formée par une bande (C) qui est fabriquée dans un polymère réticulable.

11. Ruban adhésif selon la revendication 10, **caractérisé en ce que** la bande (C) se compose d'un mélange constitué de polyisobutylène comprenant des proportions d'isoprène, d'une part, et des polymères réticulables, d'autre part.

12. Ruban adhésif selon la revendication 4, **caractérisé en ce que** la couche adhésive (1) se compose de trois bandes s'étendant parallèlement à la direction longitudinale du ruban adhésif, dont la bande centrale est plus large que les deux bandes extérieures, et les deux bandes extérieures (A) se composent d'un polymère réticulable et la bande centrale (B) se compose polyisobutylène comprenant des proportions d'isoprène.

13. Ruban adhésif selon la revendication 4, **caractérisé en ce que** la couche adhésive (1) est formée par deux bandes extérieures étroites (A) composées d'un mélange constitué de polyisobutylène comprenant des proportions d'isoprène, d'une part, et des polymères réticulables, d'autre part, et par une bande centrale (B) composée de polyisobutylène comprenant des proportions d'isoprène.

14. Ruban adhésif approprié pour la réalisation du procédé selon la revendication 1, **caractérisé par** une couche adhésive (1) qui se compose de trois bandes de matière plastique reliées entre elles (A, B, A') et s'étendant parallèlement à la direction longitudinale du ruban adhésif, ces bandes étant constituées notamment d'une bande centrale (B) et de deux bandes latérales (A, A') contiguës, des deux côtés, par rapport à la bande centrale, où la bande centrale (B) est réticulée complètement ou partiellement, et les deux bandes latérales sont adhésives.

15. Ruban adhésif selon la revendication 14, **caractérisé en ce que** la bande centrale (B) de la couche adhésive (1) se compose de caoutchouc butyle complètement ou partiellement réticulé, et **en ce que** les deux bandes latérales (A, A') de la couche adhésive se composent de polyisobutylène comprenant des proportions d'isoprène.

16. Ruban adhésif selon la revendication 14, **caractérisé en ce que** la couche adhésive (1) se composant des trois bandes parallèles (A, B, A') est placée en sandwich entre une couche de recouvrement supérieure (2) non adhésive et une couche de recouvrement inférieure (2') non adhésive.
